# EUROPEAN PATENT SPECIFICATION

(11) **EP 3 044 443 B1**
(45) Date of publication and mention of the grant of the patent: **08.08.2018**
(21) Application number: 14865739.8
(22) Date of filing: 10.09.2014
(51) Int. Cl.: F02C 7/22, F02C 7/224, F23R 3/28

(54) **FUEL MANAGEMENT SYSTEM FOR A TURBINE ENGINE**
BRENNSTOFFREGELUNGSSYSTEM FÜR EINEN TURBINENMOTOR
SYSTÈME DE GESTION DE COMBUSTIBLE POUR UN MOTEUR À TURBINE

(30) Priority: 10.09.2013 US 201361876041 P
(43) Date of publication of application: 20.07.2016
(73) Proprietor: United Technologies Corporation, Farmington, CT 06032 (US)
(72) Inventor: CRAWLEY, JR. Clifton J., Glastonbury, Connecticut 06033 (US); STEARNS, Ethan, Lebanon, CT 06249 (US)
(74) Representative: Dehns
(86) International application number: PCT/US2014/054961
(87) International publication number: WO 2015/080778

(56) References cited:
- FR-A1- 2 979 671
- US-A- 4 041 697
- US-A- 4 041 697
- US-A- 4 104 873
- US-A- 4 424 667
- US-A1- 2008 216 510
- US-A1- 2008 304 958
- US-A1- 2009 235 631

## Description

### BACKGROUND OF THE INVENTION

### 1. Technical Field

This disclosure relates generally to a turbine engine and, more particularly, to a fuel management system for a turbine engine.

### 2. Background Information

A typical fuel management system for a turbine engine provides heated fuel to a plurality of fuel injectors as well to a plurality of fuel actuated devices; i.e., actuators. Heated fuel, however, may form deposits within the engine actuators, which may hinder or impede actuator performance. Some fuel management systems therefore have been configured to heat the fuel provided to the fuel injectors, while leaving the fuel provided to the engine actuators unheated. US 2009235631 A1 has been deemed to disclose features of the preamble of claim 1. US 4041697 A discloses an oil cooling system for a gas turbine engine. FR 2979671 A1 discloses a fuel management system with heat exchangers arranged in series. There is a need in the art for an improved fuel management system for a turbine engine.

### SUMMARY OF THE DISCLOSURE

According to an aspect of the invention, a system is provided for a turbine engine that includes a fuel injector and an actuator, as claimed in claim 1.

The second temperature may be greater than or substantially equal to about thirty two degrees Fahrenheit.

The second heat exchanger may be configured as or otherwise include a fuel-oil heat exchanger.

The fuel management system may include a bypass fluidly coupled in parallel with the second heat exchanger.

The fuel management system may include a flow regulator. The flow regulator may receive the heated fuel from the second heat exchanger, and selectively provide the received fuel to the actuator and the flow path.

The fuel management system may include a flow regulator. The flow regulator may selectively receive the fuel from the flow path and the heat exchanger, and provide the received fuel to the actuator. The fuel management system may also include a second flow regulator. The second flow regulator may receive the fuel from the flow regulator, and selectively provide the received fuel to the actuator and the flow path.

The fuel management system may include a flow regulator. The flow regulator may receive the heated fuel from the heat exchanger, and selectively provide the received fuel to the fuel injector and the flow path.

The fuel management system may include a flow regulator. The flow regulator may receive the heated fuel from the heat exchanger, and selectively provide the received fuel to the fuel injector and a second flow path between the heat exchanger and the flow regulator.

The fuel management system may include a heat exchanger that heats the fuel and provides the heated fuel to the flow path.

The system may include a turbine engine combustor. The fuel injector may be one of a plurality of fuel injectors that are included in the combustor and that receive the heated fuel from the fuel management system.

The actuator may be one of a plurality of actuators that receive the heated fuel from the fuel management system.

According to another aspect of the invention, a method is provided involving a fuel injector and an actuator of a turbine engine, as claimed in claim 11.

The fuel provided to the fuel injector may be heated using a first heat exchanger. The fuel provided to the actuator may be selectively heated using the second heat exchanger.

The fuel provided to the fuel injector may be heated using a heat exchanger. The fuel provided to the actuator may be partially heated using the heat exchanger.

The fuel may be heated and provided to the fuel injector and the actuator using a fuel management system as described above.

The foregoing features and the operation of the invention will become more apparent in light of the following description and the accompanying drawings.

### BRIEF DESCRIPTION OF THE DRAWINGS

FIG. 1 is a side cutaway illustration of a geared turbine engine;
FIG. 2 is a side sectional illustration of a portion of a combustor section for the turbine engine;
FIG. 3 is a schematic illustration of a system for the turbine engine;
FIG. 4 is a schematic illustration of a system for the turbine engine that is not in accordance with the invention;
FIG. 5 is a schematic illustration of another system for the turbine engine;
FIG. 6 is a schematic illustration of another system for the turbine engine;
FIG. 7 is a schematic illustration of another system for the turbine engine; and
FIG. 8 is a schematic illustration of another system for the turbine engine.

### DETAILED DESCRIPTION OF THE INVENTION

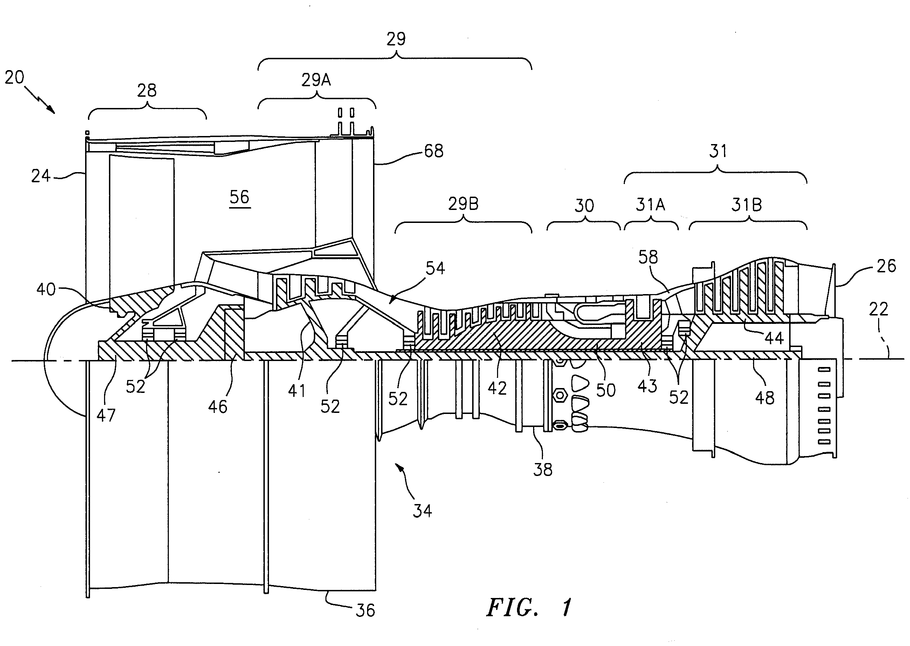

FIG. 1 is a side cutaway illustration of a geared turbine engine 20. The engine 20 extends along a centerline 22 between an upstream airflow inlet 24 and a downstream airflow exhaust 26. The engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B. The engine sections 28-31 are arranged sequentially along the centerline 22 within an engine housing 34, which includes a first engine case 36 (e.g., a fan nacelle) and a second engine case 38 (e.g., a core nacelle).

Each of the engine sections 28, 29A, 29B, 31A and 31B includes a respective rotor 40-44. Each of the rotors 40-44 includes a plurality of rotor blades arranged circumferentially around and connected to (e.g., formed integral with or mechanically fastened, welded, brazed, adhered or otherwise attached to) one or more respective rotor disks. The fan rotor 40 is connected to a gear train 46 through a shaft 47. The gear train 46 and the LPC rotor 41 are connected to and driven by the LPT rotor 44 through a low speed shaft 48. The HPC rotor 42 is connected to and driven by the HPT rotor 43 through a high speed shaft 50. The shafts 47, 48 and 50 are rotatably supported by a plurality of bearings 52. Each of the bearings 52 is connected to the second engine case 38 by at least one stator such as, for example, an annular support strut.

Air enters the engine 20 through the airflow inlet 24, and is directed through the fan section 28 and into an annular core gas path 54 and an annular bypass gas path 56. The air within the core gas path 54 may be referred to as "core air". The air within the bypass gas path 56 may be referred to as "bypass air".

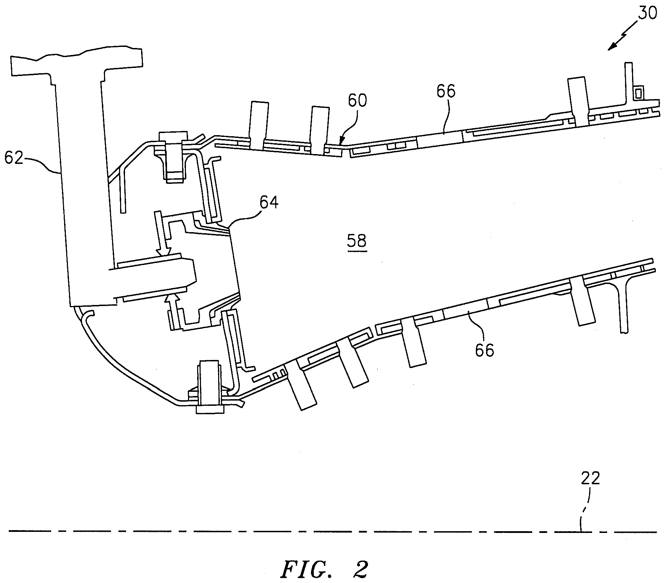

The core air is directed through the engine sections 29-31 and exits the engine 20 through the airflow exhaust 26. Referring to FIG. 2, within the combustor section 30, fuel is injected into a chamber 58 of an annular combustor 60 by a plurality of circumferentially arranged fuel injectors 62. The injected fuel is mixed with swirled and/or turbulent core air provided by a plurality of swirlers 64. This fuel-core air mixture is ignited, quenched with additional core air provided by a plurality of circumferentially arranged quench apertures 66, and combusted to power the engine 20 and provide forward engine thrust.

Referring to FIG. 1, the bypass air is directed through the bypass gas path 56 and out of the engine 20 through a bypass nozzle 68 to provide additional forward engine thrust. Alternatively, the bypass air may be directed out of the engine 20 through a thrust reverser to provide reverse engine thrust.

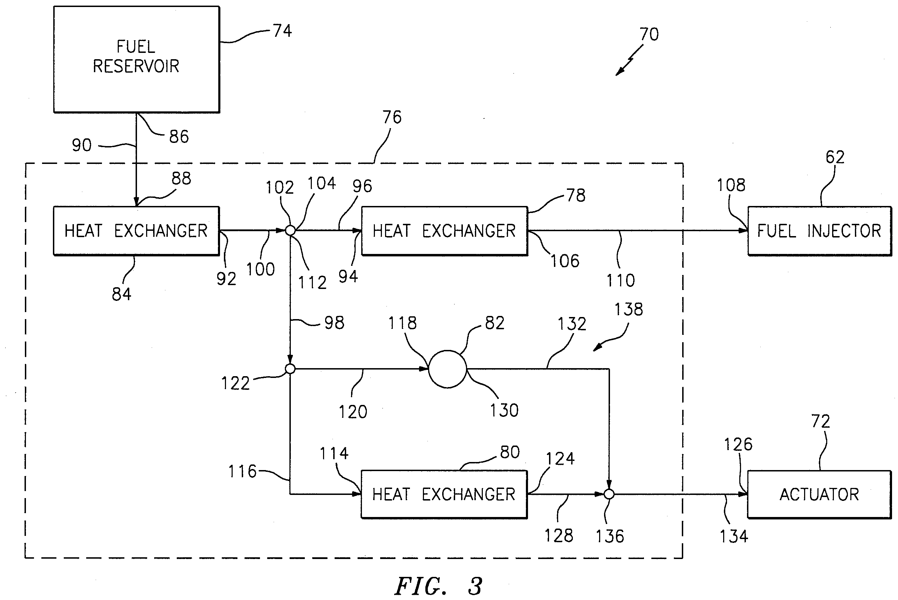

FIG. 3 illustrates a system 70 for use with a turbine engine such as exemplary engine 20. This system 70 includes at least one of the fuel injectors 62, at least one actuator 72, a fuel reservoir 74 (e.g., an aircraft fuel tank), and a fuel management system 76.

The actuator 72 is configured as a fuel actuated device (e.g., valve) that moves or otherwise actuates one or more effectors in the engine 20. Examples of an effector include, but are not limited to, a device that turns one or more rotatable stator vanes, a device that deploys the thrust reverser, etc. The system 70, of course, may also or alternatively include various types of actuators other than those described above.

The fuel management system 76 is adapted to direct fuel from the fuel reservoir 74, or any other fuel source, to at least the fuel injector 62 and the actuator 72. The fuel management system 76 is also adapted to selectively heat the fuel. In particular, the fuel management system 76 is adapted to provide (i) heated fuel to the fuel injector 62 at a first temperature and (ii) heated fuel to the actuator 72 at a second temperature that may be different than the first temperature. The first temperature, for example, may be at least about ten to one hundred degrees Fahrenheit (10-100 °F) greater than the second temperature. The second temperature may be greater than or substantially equal to about thirty two degrees Fahrenheit (32 °F).

The fuel management system 76 includes a first heat exchanger 78, a second heat exchanger 80 and a flow regulator 82. The fuel management system 76 may also include a third heat exchanger 84.

Each of the heat exchangers 78, 80 and 84 may be configured as a fuel-oil heat exchanger. Each of the heat exchangers, for example, may transfer heat energy from relatively hot lubrication oil to relatively cool fuel. The first and/or the second heat exchangers 78 and 80 may each receive lubrication oil from a gear train and/or bearing lubrication system of the engine 20. The third heat exchanger 84 may receive lubrication oil from a generator connected to the engine 20.

The flow regulator 82 may be configured as a valve or pump. The flow regulator 82 may be electronically controlled by a controller. Alternatively, the flow regulator 82 may be mechanically or thermally actuated.

An outlet 86 of the fuel reservoir 74 is fluidly coupled with an inlet 88 of the third heat exchanger 84 by a flow path 90; e.g., one or more conduits, hoses, tubes, channels, etc. An outlet 92 of the third heat exchanger 84 is fluidly coupled with an inlet 94 of the first heat exchanger 78 by a flow path 96. The outlet 92 is also fluidly coupled with the second heat exchanger 80 and the flow regulator 82 by a flow path 98. The flow paths 96 and 98 split from a common flow path 100 at, for example, a fuel splitter 102 (e.g., a Y-fitting or a 2-way valve).

A first outlet 104 of the fuel splitter 102 is fluidly coupled with the inlet 94 by the flow path 96. An outlet 106 of the first heat exchanger 78 is fluidly coupled with an inlet 108 of the fuel injector 62 by a flow path 110.

A second outlet 112 of the fuel splitter 102 is fluidly coupled with an inlet 114 of the second heat exchanger 80 by a flow path 116. The second outlet 112 is also fluidly coupled with an inlet 118 of the flow regulator 82 by a flow path 120. The flow paths 116 and 120 split from the common flow path 98 at, for example, a fuel splitter 122 (e.g., a Y-fitting or a 2-way valve). An outlet 124 of the second heat exchanger 80 is fluidly coupled with an inlet 126 of the actuator 72 by a flow path 128. An outlet 130 of the flow regulator 82 is also fluidly coupled with the inlet 126 by a flow path 132. The flow paths 128 and 132 join into a common flow path 134 at, for example, a fuel mixer 136 (e.g., a Y-fitting or a 2-way valve). The flow regulator 82 therefore is fluidly coupled in parallel to the second heat exchanger 80. In this manner, the flow regulator 82 and the flow paths 120 and 132 form a heat exchanger bypass 138.

During system 70 operation, fuel from the fuel reservoir 74 is provided at the flow path 100 after being directed through the flow path 90 and optionally heated by the third heat exchanger 84. A first portion of the fuel in the flow path 100 is directed into the flow path 96, and a second portion of the fuel in the flow path 100 is directed into the flow path 98. The fuel within the flow path 96 is directed through and heated by the first heat exchanger 78. This heated fuel is thereafter provided to the fuel injector 62 at the first temperature. It will be appreciated that the flow path 90 may be fluidly coupled to the flow path 100 without the third heat exchanger 84, and thus, that the system 70 may be configured to provide heated fuel to the fuel injector 62 from the fuel reservoir 74 at the first temperature via heating from the first heat exchanger 78 without heating from the third heat exchanger 84.

Under some conditions, the temperature of the fuel provided at the flow path 100 may be below a lower threshold (e.g., 32 °F). During such conditions, the flow regulator 82 may be operated such that substantially all of the fuel within the flow path 98 is directed through the second heat exchanger 80 via the flow path 116 (e.g., the flow regulator 82 is in a closed condition and fluidly isolates the flow path 120 from the flow path 132), heated to a temperature above 32 °F, and provided to the actuator 72 at the second temperature via the flow paths 128, 134.

Under some conditions, the temperature of the fuel provided at the flow path 100 may be above an upper threshold that is greater than the lower threshold. During such conditions, the flow regulator 82 may be operated such that substantially all of the fuel within the flow path 98 is directed through the heat exchanger bypass 138. The flow regulator 82, for example, may be opened thereby fluidly coupling the flow path 120 with the flow path 98. Substantially all of the fuel within the flow path 98 may flow through the heat exchanger bypass 138 in this state because the bypass may have less fluid resistance than a path through the second heat exchanger 80 and the flow paths 116 and 128. Alternatively, where the splitter 122 is a valve, the splitter 122 may divert the fuel to the heat exchanger bypass 138. This generally unheated fuel is thereafter provided to the actuator 72 at the second temperature.

Under some conditions, the temperature of the fuel provided at the flow path 100 may be between the lower and the upper thresholds. During such conditions, the flow regulator 82 may be operated such that (i) some of the fuel within the flow path 98 is directed through the second heat exchanger 80 and heated and (ii) some of the fuel within the flow path 98 is directed through the heat exchanger bypass 138. The flow regulator 82, for example, may be operated such that the fluid resistance through the heat exchanger bypass 138 is substantially equal to that through the second heat exchanger 80. The fuel flowing through the heat exchanger 80 and the bypass 138 mixes at the fuel mixer 136 and provides semi-heated fuel. This semi-heated fuel is thereafter provided to the actuator 72 at the second temperature.

By heating the fuel as described above, the fuel management system 76 may maintain the temperature of the fuel provided to the actuator 72 within a predetermined temperature range, which is defined by the lower and the upper thresholds. The lower threshold may be selected such that moisture within the fuel does not freeze and degrade or impede actuator 72 performance. The upper threshold may be selected such that the actuator 72 is not exposed to relatively high temperature fuel, which can increase actuator wear and form deposits. In addition, by providing relatively cool fuel to the actuator 72, the actuator 72 may be made from less expensive materials.

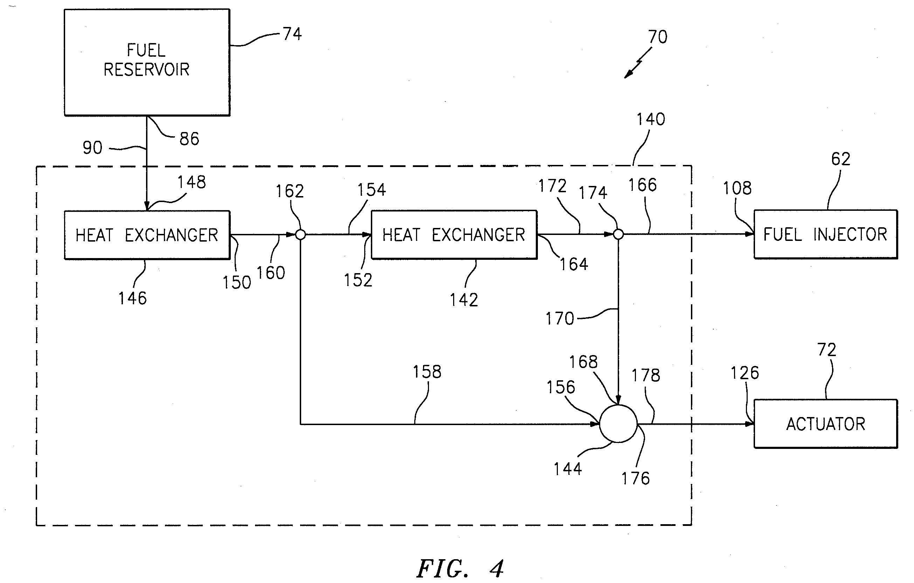

FIG. 4 illustrates a system 70 not in accordance with the invention with a fuel management system 140. This fuel management system 140 includes a first heat exchanger 142 and a flow regulator 144. The fuel management system 140 may also include a second heat exchanger 146.

Each of the heat exchangers 142 and 146 may be configured as a fuel-oil heat exchanger. Each of the heat exchangers, for example, may transfer heat energy from relatively hot lubrication oil to relatively cool fuel. The first heat exchanger 142 may receive lubrication oil from the gear train and/or bearing lubrication system of the engine 20. The second heat exchanger 146 may receive lubrication oil from the generator connected to the engine 20.

The flow regulator 144 may be configured as a valve or pump. The flow regulator 144 may be electronically controlled by a controller. Alternatively, the flow regulator 144 may be mechanically or thermally actuated.

The outlet 86 is fluidly coupled with an inlet 148 of the second heat exchanger 146 by the flow path 90. An outlet 150 of the second heat exchanger 146 is fluidly coupled with an inlet 152 of the first heat exchanger 142 by a flow path 154. The outlet 150 is also fluidly coupled with a first inlet 156 of the flow regulator 144 by a flow path 158. The flow paths 154 and 158 split from a common flow path 160 at, for example, a fuel splitter 162 (e.g., a Y-fitting).

An outlet 164 of the first heat exchanger 142 is fluidly coupled with the inlet 108 by a flow path 166. The outlet 164 is also fluidly coupled with a second inlet 168 of the flow regulator 144 by a flow path 170. The flow paths 166 and 170 split from a common flow path 172 at, for example, a fuel splitter 174 (e.g., a Y-fitting). An outlet 176 of the flow regulator 144 is fluidly coupled with the inlet 126 by a flow path 178.

During system 70 operation, fuel from the fuel reservoir 74 may be directed through the second heat exchanger 146 and heated. A first portion of the fuel provided at the flow path 160 is directed through the first heat exchanger 142 and heated. This heated fuel is thereafter provided to the fuel injector 62 via the flow path 166 at the first temperature.

Under some conditions, the temperature of the fuel provided at the flow path 160 may be below the lower threshold. During such conditions, the flow regulator 144 may be operated such that substantially all of the fuel provided to the actuator 72 is first directed through the first heat exchanger 142 and heated (e.g., the flow regulator 144 is placed in or passively achieves a closed condition and fluidly isolates the flow path 158 from the flow path 178, rendering the flow paths 160, 154, 172, 170, and 178 as the fuel passageway for substantially all of the fuel which is directed to the actuator 72). This heated fuel is provided to the actuator 72 at the second temperature, which under these conditions is substantially the same to the first temperature.

Under some conditions, the temperature of the fuel provided at the flow path 160 may be above the upper threshold. During such conditions, the flow regulator 144 may be operated such that substantially all of the fuel provided to the actuator 72 is directed through the flow path 158, thereby bypassing the first heat exchanger 142. The flow regulator 144, for example, may be operated to fluidly decouple (e.g., isolate) the flow path 170 from the flow path 178. This unheated fuel is thereafter provided to the actuator 72 at the second temperature.

Under some conditions, the temperature of the fuel provided at the flow path 160 may be between the lower and the upper thresholds. During such conditions, the flow regulator 144 may be operated such that (i) some of the fuel provided to the actuator 72 is directed through the first heat exchanger 142 and heated and (ii) some of the fuel provided to the actuator 72 is directed through flow path 158. Thus, the flow regulator 144 provides semi-heat fuel by mixing heated fuel received through the flow path 170 and the fuel received through the flow path 158. The semi-heated fuel is thereafter provided to the actuator 72 at the second temperature.

The fuel management systems 76 and 140 of FIGS. 3 and 4 may include one or more additional components to provide additional temperature and/or fuel flow control. Examples of such additional components include, but are not limited to, a fuel pump, a fuel filter, a recirculation circuit, a temperature sensor, and one or more controllers. Exemplary embodiments of the fuel management system 76 utilizing some of these additional components are described below. These additional components, however, may also be configured with the fuel management system 140 in a similar manner.

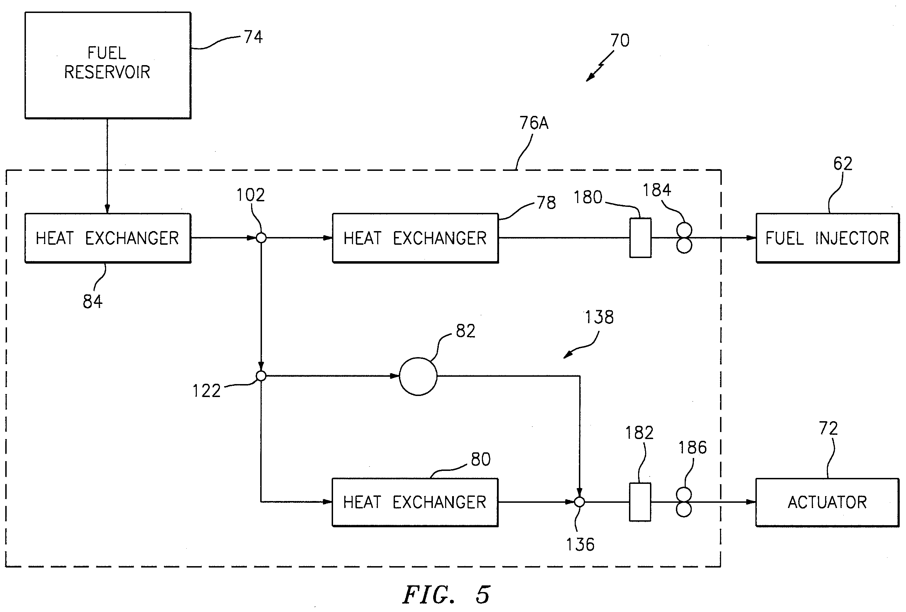

FIG. 5 illustrates an embodiment of the fuel management system 76A that includes a plurality of fuel filters 180 and 182 and a plurality of fuel pumps 184 and 186. The fuel filter 180 and the fuel pump 184 are fluidly coupled inline between the first heat exchanger 78 and the fuel injector 62. The fuel filter 182 and the fuel pump 186 are fluidly coupled inline between the fuel mixer 136 and the actuator 72.

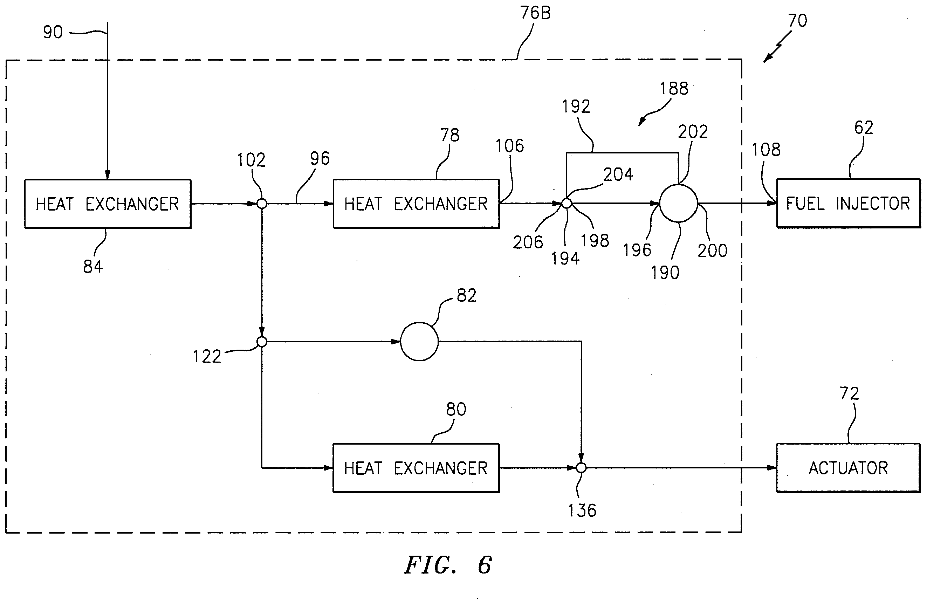

FIG. 6 illustrates an embodiment of the fuel management system 76B that includes a recirculation circuit 188. This recirculation circuit 188 includes a flow regulator 190 (e.g., a two way valve), a flow path 192 and a fuel mixer 194. An inlet 196 of the flow regulator 190 is fluidly coupled with an outlet 198 of the fuel mixer 194. A first outlet 200 of the flow regulator 190 is fluidly coupled with the inlet 108. A second outlet 202 of the flow regulator 190 is fluidly coupled with a first inlet 204 of the fuel mixer 194 by the flow path 192. A second inlet 206 of the fuel mixer 194 is fluidly coupled with the outlet 106. With this configuration, the flow regulator 190 may be operated to selectively recirculate some or all of the fuel where, for example, the fuel demand of the fuel injector 62 is low or the fuel heated by the first heat exchanger 78 is above an upper temperature threshold. The flow regulator 190, for example, may direct some or all of the fuel within the flow path 96 to the fuel injector 62, or some or all of the fuel within the flow path 96 to the fuel mixer 194. It will be appreciated that such redirected fuel may passively cool or be cooled to a temperature below the upper threshold prior to re-entry into flow regulator 190.

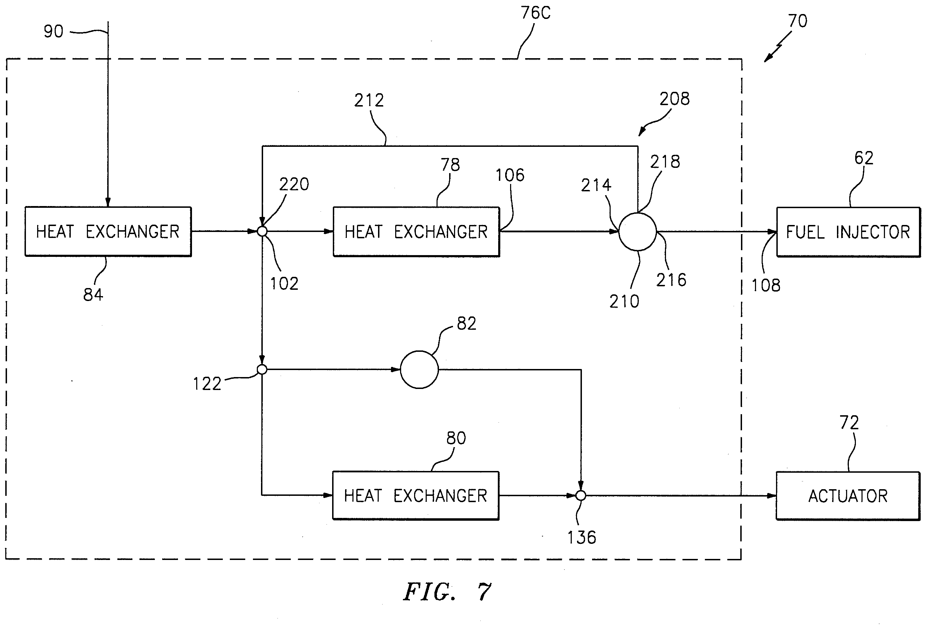

FIG. 7 illustrates an embodiment of the fuel management system 76C that includes a recirculation circuit 208. This recirculation circuit 208 includes a flow regulator 210 (e.g., a two way valve) and a flow path 212. An inlet 214 of the flow regulator 210 is fluidly coupled with the outlet 106. A first outlet 216 of the flow regulator 210 is fluidly coupled with the inlet 108. A second outlet 218 of the flow regulator 210 is fluidly coupled by the flow path 212 with a second inlet 220 of the fuel splitter 102, which here is also configured as a fuel mixer. With this configuration, the flow regulator 210 may be operated to selectively recirculate some or all of the fuel where, for example, the fuel demand of the fuel injector 62 is low or the fuel heated by the first heat exchanger 78 is below a lower temperature threshold.

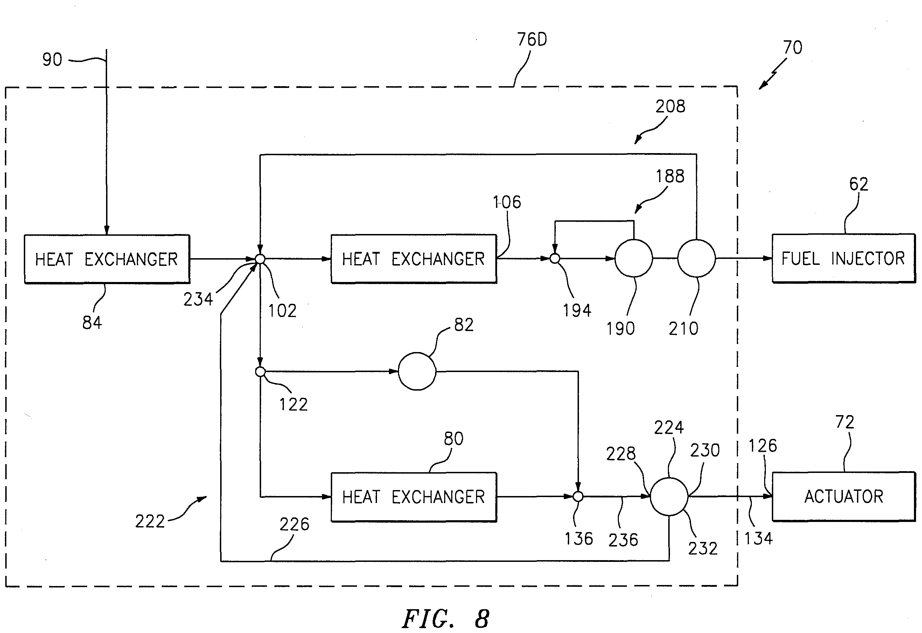

FIG. 8 illustrates an embodiment of the fuel management system 76D that includes a recirculation circuit 222. The fuel management system 76D may also include one or more of the recirculation circuits 188 and 208.

The recirculation circuit 222 includes a flow regulator 224 (e.g., a two way valve) and a flow path 226. An inlet 228 of the flow regulator 224 is fluidly coupled with an outlet of the mixer 136. A first outlet 230 of the flow regulator 224 is fluidly coupled with the inlet 126. A second outlet 232 of the flow regulator 224 is fluidly coupled by the flow path 226 with a third inlet 234 of the fuel splitter / mixer 102. With this configuration, the flow regulator 224 may be operated to selectively recirculate some or all of the fuel within flow path 236 where, for example, the fuel demand of the actuator 72 is low or the fuel heated by the second heat exchanger 80 is below the lower temperature threshold.

While the heat exchangers are described above as oil-fuel heat exchangers, one or more of these heat exchangers may each have an alternate configuration. For example, one or more of the heat exchangers may each be configured as a fuel-fuel heat exchanger or an air-fuel heat exchanger. The present invention therefore is not limited to any particular heat exchanger configurations.

The fuel management systems described above may be included in various turbine engines other than the one described above. The fuel management system, for example, may be included in a geared turbine engine where a gear train connects one or more shafts to one or more rotors in a fan section, a compressor section and/or any other engine section. Alternatively, the fuel management system may be included in a turbine engine configured without a gear train. The fuel management system may be included in a geared or non-geared turbine engine configured with a single spool, with two spools (e.g., see FIG. 1), or with more than two spools. The turbine engine may be configured as a turbofan engine, a turbojet engine, a propfan engine, or any other type of turbine engine. The present invention therefore is not limited to any particular types or configurations of turbine engines.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined within any one of the aspects and remain within the scope of the invention. Accordingly, the present invention is not to be restricted except in light of the attached claims.

## Claims

1. A system (70) for a turbine engine (20) including a fuel injector (62) and an actuator (72) configured as a fuel actuated device that activates one or more effectors in the turbine engine (20), the system comprising:
a fuel management system (76) configured to receive fuel from a flow path (100) and provide a first portion of the fuel received from the flow path (100) to the fuel injector (62) at a first temperature, and a second portion of the fuel received from the flow path (100) to the actuator (72) at a second temperature different than the first temperature, the first temperature is greater than the second temperature; and
a fuel-oil heat exchanger (78) that heats the fuel provided to the fuel injector (62), **characterised in that** the fuel management system (76) further includes a second heat exchanger (80) that heats the fuel provided to the actuator (72), wherein the fuel management system (76) further includes a bypass (138) fluidly coupled in parallel with the second heat exchanger (80).

2. The system of claim 1, wherein the second temperature is greater than or substantially equal to thirty two degrees Fahrenheit (zero degrees Celsius).

3. The system of claim 1 or 2, wherein the fuel management system (76) further includes a flow regulator (224) that receives the heated fuel from the second heat exchanger (80), and selectively provides the received fuel to the actuator (72) and the flow path (100).

4. The system of claim 1 or 2, wherein the fuel management system further includes a flow regulator (82) that selectively receives the fuel from the flow path (100) and the heat exchanger (78), and provides the received fuel to the actuator (72).

5. The system of claim 4, wherein the fuel management system (76) further includes a second flow regulator (224) that receives the fuel from the flow regulator (82), and selectively provides the received fuel to the actuator (72) and the flow path (100).

6. The system of any preceding claim, wherein the fuel management system further includes a flow regulator (190) that receives the heated fuel from the heat exchanger (78), and selectively provides the received fuel to the fuel injector (62) and either the flow path (100), or a second flow path between the heat exchanger (78) and the flow regulator (190).

7. The system of any preceding claim , wherein the fuel management system (76) further includes a heat exchanger (84) that heats the fuel and provides the heated fuel to the flow path (100).

8. The system of any preceding claim, further comprising:
a turbine engine combustor (60),
wherein the fuel injector (62) is one of a plurality of fuel injectors(62) included in the combustor (60) and that receive the heated fuel from the fuel management system (76).

9. The system of claim 8, wherein the actuator (72) is one of a plurality of actuators (72) that receive the heated fuel from the fuel management system (76).

10. The system of claim 1, further comprising:
the fuel injector (62);
the actuator (72);
a fuel splitter (174) including a first outlet and a second outlet; wherein
the fuel-oil heat exchanger (78) is fluidly coupled between the first outlet and the fuel injector (62);
the second heat exchanger (80) is fluidly coupled between the second outlet and the actuator (72);
the first fuel-oil heat exchanger (78) is configured to receive fuel from the first outlet, heat the received fuel, and provide the heated fuel to the fuel injector (62) at the first temperature; and
the second heat exchanger (80) is configured to receive fuel from the second outlet, heat the received fuel, and provide the heated fuel to the actuator (72) at the second temperature.

11. A method involving a fuel injector (62) and an actuator (72) of a turbine engine (20), wherein the actuator is configured as a fuel actuated device that activates one or more effectors in the turbine engine (20), the method comprising:
heating fuel received from a flow path (100);
providing some of the heated fuel to the fuel injector (62) at a first temperature; and
providing some of the heated fuel to the actuator (72) at a second temperature that is different than the first temperature, wherein the first temperature is greater than the second temperature, and the fuel provided to the fuel injector (62) is heated using a first heat exchanger (78); **characterised in that**:
the fuel provided to the actuator (72) is selectively heated using a second heat exchanger (80).

12. The method of claim 11, wherein
the fuel provided to the fuel injector (62) is heated using a heat exchanger (78); and
the fuel provided to the actuator (72) is partially heated using the heat exchanger (78).

## Patentansprüche

1. System (70) für einen Turbinenmotor (20) einschließlich eines Kraftstoffinjektors (62) und eines Betätigungselements (72), das als eine durch Kraftstoff betätigte Vorrichtung konfiguriert ist, die eine oder mehrere Effektoren in dem Turbinenmotor (20) aktiviert, wobei das Verfahren Folgendes umfasst:
ein Kraftstoffverwaltungssystem (76), das dazu konfiguriert ist, Kraftstoff aus einem Strömungsverlauf (100) aufzunehmen und dem Kraftstoffinjektor (62) einen ersten Abschnitt des Kraftstoffs, der aus dem Strömungsverlauf (100) aufgenommen wurde, zu einer ersten Temperatur, und dem Betätigungselement (72) einen zweiten Abschnitt des Kraftstoffs, der aus dem Strömungsverlauf (100) aufgenommen wurde, zu einer zweiten Temperatur breitzustellen, die sich von der ersten Temperatur unterscheidet, wobei die erste Temperatur größer ist als die zweite Temperatur; und
einen Kraftstoff-Öl-Wärmetauscher (78), der den Kraftstoff, welcher dem Kraftstoffinjektor (62) bereitgestellt wird, wärmt, **dadurch gekennzeichnet, dass** das Kraftstoffverwaltungssystem (76) ferner einen zweiten Wärmetauscher (80) beinhaltet, der den Kraftstoff, welcher dem Betätigungselement (72) bereitgestellt wird, wärmt, wobei das Kraftstoffverwaltungssystem (76) ferner einen Bypass (138) umfasst, der fluidisch parallel mit dem zweiten Wärmetauscher (80) gekoppelt ist.

2. System nach Anspruch 1, wobei die zweite Temperatur größer ist als oder im Wesentlichen gleich ist wie etwa zweiunddreißig Grad Fahrenheit (Null Grad Celsius).

3. System nach Anspruch 1 oder 2, wobei das Kraftstoffverwaltungssystem (76) ferner einen Strömungsregulierer (224) beinhaltet, der den erwärmten Kraftstoff von dem zweiten Wärmetauscher (80) empfängt und dem Betätigungselement (72) und dem Strömungsverlauf (100) den aufgenommenen Kraftstoff selektiv bereitstellt.

4. System nach Anspruch 1 oder 2, wobei das Kraftstoffverwaltungssystem ferner einen Strömungsregulierer (82) umfasst, der den Kraftstoff aus dem Strömungsverlauf (100) und dem Wärmetauscher (78) selektiv aufnimmt, und dem Betätigungselement (72) den aufgenommenen Kraftstoff bereitstellt.

5. System nach Anspruch 4, wobei das Kraftstoffverwaltungssystem (76) ferner einen zweiten Strömungsregulator (224) umfasst, der den Kraftstoff von dem Strömungsregulator (82) aufnimmt und dem Betätigungselement (72) und dem Strömungsverlauf (100) den aufgenommenen Kraftstoff selektiv bereitstellt.

6. System nach einem der vorhergehenden Ansprüche, wobei das Kraftstoffverwaltungssystem ferner einen Strömungsregulator (190) beinhaltet, der den gewärmten Kraftstoff aus dem Wärmetauscher (78) aufnimmt und dem Kraftstoffinjektor (62) und entweder dem Strömungsverlauf (100) oder einem zweiten Strömungsverlauf zwischen dem Wärmetauscher (78) und dem Strömungsregulator (190) den aufgenommenen Kraftstoff selektiv bereitstellt.

7. System nach einem der vorhergehenden Ansprüche, wobei das Kraftstoffverwaltungssystem (76) ferner einen Wärmetauscher (84) beinhaltet, der den Kraftstoff wärmt und dem Strömungspfad (100) den gewärmten Kraftstoff bereitstellt.

8. System nach einem der vorhergehenden Ansprüche, das ferner Folgendes umfasst:
eine Turbinenmotorbrennkammer (60),
wobei der Kraftstoffinjektor (62) einer von einer Vielzahl von Kraftstoffinjektoren (62) ist, die in der Brennkammer (60) beinhaltet sind und die den gewärmten Kraftstoff aus dem Kraftstoffverwaltungssystem (76) aufnehmen.

9. System nach Anspruch 8, wobei das Betätigungselement (72) eines einer Vielzahl von Betätigungselementen (72) ist, die den erwärmten Kraftstoff aus dem Kraftstoffverwaltungssystem (76) aufnehmen.

10. System nach Anspruch 1, das ferner Folgendes umfasst:
den Kraftstoffinjektor (62);
das Betätigungselement (72);
einen Brennstoffteiler (174), einschließlich eines ersten Ausgangs und eines zweiten Ausgangs; wobei
der Kraftstoff-Öl-Wärmetauscher (78) fluidisch zwischen dem ersten Ausgang und dem Kraftstoffinjektor (62) gekoppelt ist;
der zweite Wärmetauscher (80) fluidisch zwischen dem zweiten Ausgang und dem Betätigungselement (72) gekoppelt ist;
der erste Kraftstoff-Öl-Wärmetauscher (78) dazu konfiguriert ist, Kraftstoff aus dem ersten Ausgang aufzunehmen, den aufgenommenen Kraftstoff zu wärmen und dem Kraftstoffinjektor (62) den erwärmten Kraftstoff zu der ersten Temperatur bereitzustellen; und
der zweite Wärmetauscher (80) dazu konfiguriert ist, Kraftstoff aus dem zweiten Ausgang aufzunehmen, den aufgenommenen Kraftstoff zu wärmen und dem Betätigungselement (72) den gewärmten Kraftstoff zu der zweiten Temperatur bereitzustellen.

11. Verfahren, das einen Kraftstoffinjektor (62) und ein Betätigungselement (72) eines Turbinenmotors (20) einbindet, wobei das Betätigungselement als eine durch Kraftstoff betätigte Vorrichtung konfiguriert ist, die einen oder mehrere Effektoren in dem Turbinenmotor (20) aktiviert, wobei das Verfahren Folgendes umfasst:
Wärmen von Kraftstoff, der aus einem Strömungsverlauf (100) aufgenommen ist;
Bereitstellen eines Teils des erwärmten Kraftstoffs an den Kraftstoffinjektor (62) zu einer ersten Temperatur; und
Bereitstellen eines Teils des erwärmten Kraftstoffs an das Betätigungselement (72) zu einer zweiten Temperatur, die sich von der ersten Temperatur unterscheidet, wobei die erste Temperatur größer ist als die zweite Temperatur, und wobei der Kraftstoff, der dem Kraftstoffinjektor (62) bereitgestellt wird, unter Verwendung eines ersten Wärmetauschers (78) erwärmt ist; **dadurch gekennzeichnet, dass**:
der Kraftstoff, der dem Betätigungselement (72) bereitgestellt ist, selektiv unter Verwendung eines zweiten Wärmetauschers (80) erwärmt ist.

12. Verfahren nach Anspruch 11, wobei
der Kraftstoff, der dem Kraftstoffinjektor (62) bereitgestellt ist unter Verwendung eines Wärmetauschers (78) erwärmt ist; und
der Kraftstoff, der dem Betätigungselement (72) bereitgestellt ist, teilweise unter Verwendung des Wärmetauschers (78) erwärmt ist.

## Revendications

1. Système (70) pour un moteur à turbine (20) comprenant un injecteur de combustible (62) et un actionneur (72) configuré en tant que dispositif actionné par combustible qui active un ou plusieurs effecteurs dans le moteur à turbine (20), le système comprenant :
un système de gestion de combustible (76) configuré pour recevoir du combustible d'un trajet d'écoulement (100) et fournir une première portion du combustible reçu du trajet d'écoulement (100) à l'injecteur de combustible (62) à une première température, et une deuxième portion du combustible reçu du trajet d'écoulement (100) à l'actionneur (72) à une deuxième température différente de la première température, la première température est supérieure à la deuxième température ; et
un échangeur de chaleur combustible-huile (78) qui chauffe le combustible fourni à l'injecteur de combustible (62), **caractérisé en ce que** le système de gestion de combustible (76) comprend en outre un deuxième échangeur de chaleur (80) qui chauffe le combustible fourni à l'actionneur (72), dans lequel le système de gestion de combustible (76) comprend en outre une dérivation (138) couplée fluidiquement en parallèle avec le deuxième échangeur de chaleur (80).

2. Système selon la revendication 1, dans lequel la deuxième température est supérieure ou sensiblement égale à trente-deux degrés Fahrenheit (zéro degré Celsius).

3. Système selon la revendication 1 ou 2, dans lequel le système de gestion de combustible (76) comprend en outre un régulateur de débit (224) qui reçoit le combustible chauffé du deuxième échangeur de chaleur (80), et fournit sélectivement le combustible reçu à l'actionneur (72) et au trajet d'écoulement (100).

4. Système selon la revendication 1 ou 2, dans lequel le système de gestion de combustible comprend en outre un régulateur de débit (82) qui reçoit sélectivement le combustible du trajet d'écoulement (100) et de l'échangeur de chaleur (78), et fournit le combustible reçu à l'actionneur (72).

5. Système selon la revendication 4, dans lequel le système de gestion de combustible (76) comprend en outre un deuxième régulateur de débit (224) qui reçoit le combustible du régulateur de débit (82), et fournit sélectivement le combustible reçu à l'actionneur (72) et au trajet d'écoulement (100).

6. Système selon une quelconque revendication précédente, dans lequel le système de gestion de combustible comprend en outre un régulateur de débit (190) qui reçoit le combustible chauffé de l'échangeur de chaleur (78), et fournit sélectivement le combustible reçu à l'injecteur de combustible (62) et soit au trajet d'écoulement (100), soit à un deuxième trajet d'écoulement entre l'échangeur de chaleur (78) et le régulateur de débit (190).

7. Système selon une quelconque revendication précédente, dans lequel le système de gestion de combustible (76) comprend en outre un échangeur de chaleur (84) qui chauffe le combustible et fournit le combustible chauffé au trajet d'écoulement (100).

8. Système selon une quelconque revendication précédente, comprenant en outre :
une chambre de combustion de moteur à turbine (60),
dans lequel l'injecteur de combustible (62) est un d'une pluralité d'injecteurs de combustible (62) compris dans la chambre de combustion (60) et qui reçoivent le combustible chauffé du système de gestion de combustible (76).

9. Système selon la revendication 8, dans lequel l'actionneur (72) est un d'une pluralité d'actionneurs (72) qui reçoivent le combustible chauffé du système de gestion de combustible (76).

10. Système selon la revendication 1, comprenant en outre :
l'injecteur de combustible (62) ;
l'actionneur (72) ;
un séparateur de combustible (174) comprenant une première sortie et une deuxième sortie ; dans lequel
l'échangeur de chaleur combustible-huile (78) est couplé fluidiquement entre la première sortie et l'injecteur de combustible (62) ;
le deuxième échangeur de chaleur (80) est couplé fluidiquement entre la deuxième sortie et l'actionneur (72) ;
le premier échangeur de chaleur combustible-huile (78) est configuré pour recevoir du combustible de la première sortie, chauffer le combustible reçu, et fournir le combustible chauffé à l'injecteur de combustible (62) à la première température ; et
le deuxième échangeur de chaleur (80) est configuré pour recevoir du combustible de la deuxième sortie, chauffer le combustible reçu, et fournir le combustible chauffé à l'actionneur (72) à la deuxième température.

11. Procédé impliquant un injecteur de combustible (62) et un actionneur (72) d'un moteur à turbine (20), dans lequel l'actionneur est configuré en tant que dispositif actionné par combustible qui active un ou plusieurs effecteurs dans le moteur à turbine (20), le procédé comprenant :
le chauffage de combustible reçu d'un trajet d'écoulement (100) ;
la fourniture d'une partie du combustible chauffé à l'injecteur de combustible (62) à une première température ; et
la fourniture d'une partie du combustible chauffé à l'actionneur (72) à une deuxième température qui est différente de la première température, dans lequel la première température est supérieure à la deuxième température, et le combustible fourni à l'injecteur de combustible (62) est chauffé en utilisant un premier échangeur de chaleur (78) ;
**caractérisé en ce que** :
le combustible fourni à l'actionneur (72) est chauffé sélectivement en utilisant un deuxième échangeur de chaleur (80).

12. Procédé selon la revendication 11, dans lequel
le combustible fourni à l'injecteur de combustible (62) est chauffé en utilisant un échangeur de chaleur (78) ; et
le combustible fourni à l'actionneur (72) est partiellement chauffé en utilisant l'échangeur de chaleur (78).
